# FASCICULE DE BREVET EUROPEEN

(11) **EP 3 406 177 B1**
(45) Date de publication et mention de la délivrance du brevet: **29.01.2020**
(21) Numéro de dépôt: 18172394.1
(22) Date de dépôt: 15.05.2018
(51) Int. Cl.: A47L 11/40, B67D 7/74

(54) **UNITE MOBILE DE DILUTION, STOCKAGE ET DISTRIBUTION DE PRODUITS DE NETTOYAGE**
MOBILE EINHEIT ZUM VERDÜNNEN, LAGERN UND VERTEILEN EINES REINIGUNGSPRODUKTS
MOBILE UNIT FOR DILUTING, STORING AND DISPENSING CLEANING PRODUCTS

(30) Priorité: 22.05.2017 FR 1754529
(43) Date de publication de la demande: 28.11.2018
(73) Titulaire: Prodim, 13127 Vitrolles (FR)
(72) Inventeur: PETRIGNET, Olivier, 70400 Tavey (FR)
(74) Mandataire: Cabinet Beau de Loménie

(56) Documents cités:
- DE-U1- 9 114 044
- DE-U1- 9 114 044
- US-A- 5 651 398
- US-A1- 2014 001 054

## Description

La présente invention concerne une unité de nettoyage mobile et autonome aussi dénommée ci-après chariot. Depuis de longues années, les entreprises de propreté équipent certains de leurs sites de clients de dispositifs de dilution automatiques spécifiques pour diluer des détergents utilisés sur ces sites. De tels dispositifs de dilution sont commercialisés notamment par la société EDERMYL (France) ou la société SEKO Spa(Italie).

Ces dispositifs de dilution sont connectés au réseau d'eau potable et dotés d'un tuyau plongeur placé dans un bidon ou réservoir de produit concentré ou pur, qui délivrent au personnel chargés de l'entretien des locaux une solution aqueuse prête à l'emploi. Ces dispositifs de dilution fonctionnent grâce à un système de venturi, sans alimentation électrique, l'aspiration en détergent étant créée par la force de l'alimentation en eau.

Malheureusement, ce type d'équipement n'est installé que sur moins de 5 % des sites, car dans le domaine du nettoyage, une grande majorité des sites ne présentent pas de local dédié à l'entreprise de nettoyage et encore moins d'une arrivée d'eau pour y brancher une centrale de dilution.

En conséquence, sur la majorité des bâtiments nettoyés notamment tous les petits sites du secteur tertiaire (bureau bancaire, assurance, bureau postal, bureau de l'administration, communs d'immeubles, etc...) les produits de nettoyage mis à disposition par les prestataires de propreté sont :
- soit livrés en produits détergents concentrés en bidons de 5 à 25 litres puis dilués plus ou moins approximativement avec de l'eau sur place,
- soit livrés en bidons de 1 litre et pulvérisateurs dans lesquels le produit détergent est dilué, ainsi directement prêt à l'emploi.

Les lacunes de ces principes sont multiples :
Pour les personnels de service:
- des risques d'intoxication cutanée ou de brûlure oculaire existent lors des dilutions (projection, renversement, oubli du port des gants),
- des manipulations de produits détergents présentent donc le risque de renversement pouvant conduire à des chutes de plain-pied sur sol glissant,
- des ruptures de disponibilité des produits détergents peuvent survenir et retarder l'exécution des prestations ou conduire à se déplacer rapidement pour effectuer une livraison,
- Le port et la manutention de bidons ont, à travers l'ergonomie, un impact sur la santé du salarié.

Pour l'environnement :
- les bidons en polyéthylène une fois vides finissent dans le bac à déchets des clients ou dans les bennes des agences de propreté,
- pour cette mise au déchet, leur rinçage s'impose et par conséquent une partie des molécules chimiques vont droit au siphon de l'évier,
- les solutions de nettoyage à base du produit détergent sont souvent préparées approximativement, à défaut d'autre solution technique adaptée, dans un seau par les agents eux même et ont par conséquent elles peuvent représenter un fort impact de pollution environnementale lorsqu'ils déversent ses solutions, dans les siphons des toilettes, au terme de leur intervention,
- des bacs de rétention n'étant pas toujours possibles à mettre en œuvre ou simplement oubliés, tout incident impact le milieu de ses molécules chimique,
- depuis les entrepôts des distributeurs de produits de nettoyage, ce sont des tonnes de produits détergents qui couvrent le réseau routier pour être acheminés par camions dans les agences des prestataires de propreté où sur les sites de clients et ces produits n'étant pas très concentrés, ces tonnages sont en majorité de l'eau ce qui impact cependant fortement en CO notre environnement.

Plus particulièrement, pour les nettoyages d'installations ou établissements industrielles tels que atelier, garages, entrepôts ou usines, installations ou établissements commerciaux ou publiques du secteur des services telles que bureaux, lieux publics, cantines, restaurants ou hôtels ou encore d'installations ou établissements sanitaires ou médicaux telles que les douches, WC, hôpitaux, le personnel de nettoyage utilise trois types de produits nettoyants selon le type et/ou l'état des surfaces à nettoyer à savoir :
- détergent dégraissant neutre, et
- détergent désinfectant, et
- détergent détartrant.

Ces produits sont conditionnés initialement sous forme de gros bidons de 5 à 25 litres de produits hautement concentrés, mais sont livrés à des sociétés de nettoyage ou directement chez des clients utilisateurs finaux de préférence sous forme de plus petits bidons de produits dilués prêts à l'emploi par le personnel de nettoyage.

Ces produits sont en effet utilisés par le personnel de nettoyage sous forme de plus petits bidons de 1 à 2 L à des dilutions de 2 % à 3% en volume dans de l'eau à partir des produits concentrés, lesdites dilutions étant différentes et très précises pour les 3 catégories de détergents.

Actuellement, du fait du caractère relativement toxique et onéreux des dits produits détergents, on livre aux sociétés de nettoyage ou aux utilisateurs finaux, des petits bidons de 1 à 2 L pré-dilués et pré-étiquetés avec mention du type de détergent pour un usage direct du produit dilué par le personnel de nettoyage. Chaque petit bidon doit en outre comporter une étiquette spécifique identifiant le produit contenu et son dosage.

Une fois un bidon épuisé par le personnel de nettoyage, il doit être rincé à l'eau avant d'être en pratique jeté par le personnel de nettoyage une fois vidé - ce qui évite d'avoir à gérer la récupération des bidons usagés. Il en résulte donc une pollution environnementale par évacuation de produits toxiques lors du rinçage et en outre une perte économique importante en termes aussi bien d'étiquettes que de bidons.

D'autre part, du fait que la dilution requiert un dosage précis, la livraison des petits bidons représente un volume de livraison relativement important et donc des frais de transport importants à l'usage.

Si les produits sont livrés sous forme concentrée et dans des gros bidons pour diminuer les coûts de transport, ceci requiert que la dilution soit effectuée directement par les sociétés de nettoyage, et le cas échéant par les personnels de nettoyage dans des petits bidons à partir des gros bidons concentrés. Dans ce cas, des risques d'erreurs de produit et/ou de dosage et/ou d'étiquetages sont possibles, sans compter les risques de dégâts écologiques en cas de perte de produits lors des transvasements desdits produits toxiques, et également des risques sanitaires en cas d'accident corporel à l'occasion de ces transvasements de produits.

La précision des dilutions des produits de nettoyage est un prérequis indispensable. En effet, si ce type de produit de nettoyage est sous-dilué, les effets du nettoyage sont désastreux, la surface entretenue peut s'encrasser par création d'un biofilm et il faut bien le reconnaître, à ces taux de dilution, l'appréciation visuelle de l'agent lors de la dilution n'est plus possible.

De plus, en basculant de produits de nettoyage chimiques classiques dilués à des taux moyens situés vers 3,00 % vers des produits de nettoyage de biotechnologie dilués en moyenne à 0,30 %, ce sont 8 à 10 fois moins de volume, de camions sur les routes, de stocks à contenir sur les établissements, un vrai plus en matière de développement durable. Une unité de dilution est connue par exemple du document DE-U-9114044.

Le but de la présente invention est de fournir un dispositif et procédé de nettoyage permettant d'améliorer les conditions économiques et écologiques de préparation, livraisons et manutentions des produits de nettoyage biotechnologique relativement onéreux requérant des dilutions spécifiques précises et variées en surmontant les inconvénients ou problèmes ci-dessus mentionnés.

Pour ce faire, la présente invention fournit une unité mobile de dilution, stockage et distribution de produits de nettoyage dénommée ci-après chariot, formant un meuble caisson de rangement monté sur roulettes comprenant au moins :
a) une paroi de fond verticale au-dessus d'un plan de travail horizontal disposé entre deux parois latérales verticales délimitant une face avant apte à être fermée par un volet amovible,
b) au moins un dispositif de dilution et distribution disposé contre la dite paroi de fond verticale ou une dite paroi latérale, au-dessus dudit plan de travail horizontal,
   - le dit dispositif de dilution et distribution étant branché ou apte à être branché sur :
      - une alimentation en eau, de préférence via un premier tuyau, et
      - une pluralité de tuyaux d'alimentation en une pluralité de produits détergents concentrés s'étendant depuis ledit dispositif de dilution jusqu'à une pluralité de grands réservoirs remplis au moins en partie de différents produits détergents concentrés, et
      - un tuyau de distribution de produit de nettoyage détergent dilué dans l'eau, s'étendant depuis ledit dispositif de dilution pour remplir des petits bidons posés sur le plan de travail,
   - le dit dispositif de dilution et distribution comprenant une pluralité de préréglages préenregistrés de dilutions différentes correspondant à une pluralité de concentrations spécifiques de dilution de respectivement une pluralité de produits détergents de nettoyage dilués selon un débit réduit donné pour remplir des dits petits bidons;
c) une pluralité de distributeurs d'étiquettes de plusieurs types disposés contre la dite paroi de fond verticale ou une dite paroi latérale, au-dessus dudit plan de travail horizontal; les différents types d'étiquettes des différents distributeurs d'étiquettes mentionnant respectivement les noms des différents produits détergents de nettoyage; et
d) au moins un premier bac de rétention supporté ou défini par le dit plan de travail horizontal, de préférence disposé dessous le dit dispositif de dilution et distribution, de préférence deux bacs de rétention disposés dessous deux centrales de dilution;
e) une première étagère dessous le plan de travail supportant une pluralité cloisons verticales disposées parallèlement auxdites parois latérales délimitant une pluralité de compartiments aptes à contenir chacun une pluralité de dits petits bidons portant des étiquettes d'un des différents dits produits de nettoyage dans respectivement des dits compartiments différents; et
f) une deuxième étagère ou paroi de plancher supportant une pluralité de dits grands réservoirs remplis au moins en partie de différents produits détergents de nettoyage, avec au moins un deuxième bac de rétention dans lequel sont disposés la pluralité de dits grands réservoirs.

On comprend que :
- les deux parois latérales sont parallèles et perpendiculaires à la fois à la dite paroi de fond verticale et au dit plan de travail horizontal;
- le dit premier bac de rétention permet d'y disposer un dit petit bidon pour le remplir à partir de la station de dilution et de recueillir et contenir une partie éventuelle de liquide de produit en cas de fuite lors du remplissage du petit bidon;
- le dit volet amovible de la face avant permet de sécuriser l'accès aux produits en dehors des périodes usages ou pendant le déplacement du dit chariot.

Ce dispositif ou chariot selon l'invention est avantageux en ce qu'il permet de:
- réaliser la dilution de différents produits de nettoyage localement, in situ, et ce de façon précise et fiable en termes de dosage grâce au dit dispositif de dilution et distribution, et en termes d'étiquetage grâce aux dits dispositifs de distribution d'étiquettes ;
- réduire le nombre de petits bidons et d'étiquettes utilisés du fait que les bidons usagés peuvent être stockés dans un dit compartiment après usage et donc peuvent être ré-utilisés de surcroît en réduisant les dégâts environnementaux du fait que les bidons usagés ne sont plus jetés et n'ont plus besoin d'être rincés avant jetage ;
- éviter les dégâts accidentels corporels ou environnementaux à l'occasion des remplissages ou stockages de produit grâce aux bacs de rétention ;
- livrer uniquement des gros bidons de produits concentrés aux sociétés de nettoyage, voire des clients finaux et non plus des petits bidons pré-étiquetés et pré-dilués, ce qui représente des économies de fabrication et transport importantes en terme de volume de produit transporté dans la mesure où les transvasements se font localement au niveau du chariot mobile au sein de la société de nettoyage ou chez le client lors de la mise en œuvre ;
- réduire l'impact environnemental en réduisant les quantités de petits bidons vides qui iraient remplir les déchetteries du fait qu'un rangement est prévu pour les bidons vides de retour des sites clients, et du fait que les livraisons de petits bidons remplis sur les sites seront assorties de la reprise des petits bidons vides, qui en retour seront soit à nouveau remplis ou soit placés en attente dans la station. Il est aussi prévu dans ce rangement un espace pour des petits bidons vides de un litre neufs en réserve, pouvant être déployés chez de nouveaux clients après avoir été étiquetés sur place conformément à la législation, grâce aux porte rouleaux d'étiquettes.

L'unité mobile selon l'invention est avantageuse aussi en ce qu'elle permet de réduire :
- les risques professionnels dans l'activité des personnels d'entretien liés aux manutentions de produits lourds et dangereux en limitant les charges, et en fournissant une ergonomie de mise en œuvre optimisée, et
- les risques d'erreur de manipulation et préparation des produits de par les dispositifs de dilution préréglés avec des produits de nettoyages et contenants pré stockés de façon différentiée et des procédures d'étiquetage optimisées, et
- les risques de pollution et accidents liés aux produits en proposant des bacs de rétention et réduisant les volumes de déchets par leur recyclage (produits de nettoyage et petits bidons).

Cette unité mobile de nettoyage est autonome grâce à son raccordement permanent au réseau d'eau.

Plus particulièrement, l'unité mobile selon l'invention comprend deux dits dispositif de dilution et distribution contre la dite paroi de fond et deux dits premiers bacs de rétention sur le dit plan de travail. Ce mode de réalisation permet l'intervention concomitante de deux opérateurs. On utilisera en particulier des dispositifs de dilution et distribution à système venturi de la société ERDEMYL (France) ou SEKO (Italie) dénommés doseurs permettant de préparer des solutions de détergents diluées à un pourcentage précis.

Plus particulièrement encore, les dites cloisons verticales sont amovibles, déplaçables latéralement, les dits compartiments pouvant ainsi être en nombre et volume variables pour contenir des quantités différentes de dits petits bidons portant des étiquettes différentes. Ainsi, on peut prévoir un compartiment initial de grand volume contenant les bidons neufs vides non étiquetés et réduire le volume de ce compartiment au fur et à mesure pour laisser place à des compartiments de bidons étiquetés en partie utilisés pour être réutilisés.

Plus particulièrement encore, l'unité mobile de nettoyage selon l'invention comprend :
- au moins un dit dispositif de dilution et distribution avec au moins trois réglages correspondant à trois concentrations spécifiques de dilution des trois produits détergents de nettoyage différents selon un débit réduit donné pour remplir des petits bidons ;
- trois distributeurs d'étiquettes mentionnant respectivement les noms de dits trois produits détergents de nettoyage différents ;
- au moins trois dits compartiments contenant chacun une catégorie différente de bidons portant une dite étiquette et au moins en partie remplis d'un dit produit détergent de nettoyage différent dans chaque compartiment ;
- au moins trois dits grands réservoirs pour respectivement chacun des trois types de produits détergents de nettoyage côte à côte, les dits grands réservoirs étant équipés de tuyaux de liaison avec un dit dispositif de dilution et distribution.

Plus particulièrement encore, la dite première étagère comprend quatre dits compartiments dont trois des compartiments contiennent chacun une catégorie différente de bidons portant une dite étiquette et au moins en partie remplis d'un dit produit détergent de nettoyage différent dans chaque compartiment, un quatrième compartiment contenant des bidons neufs vides sans étiquette.

Plus particulièrement encore, les dits grands réservoirs contenant les différents dits produits de nettoyage sont respectivement de couleurs différentes et les dites étiquettes identifiant les différents dits produits de nettoyage sont respectivement de couleurs différentes.

Plus particulièrement encore, la dite deuxième étagère ou paroi de plancher supporte deux rangées d'une dite pluralité de dits grands réservoirs, de préférence deux rangées de trois dits grands réservoirs de 10 à 25 L. Une première rangée contient la pluralité des différents grands réservoirs contenant les différents produits de nettoyage en cours de branchement sur le ou les dits dispositifs de dilution et distribution. Une deuxième rangée contient des grands réservoirs de réserve de sorte que ces derniers sont remplacés dès qu'ils sont déplacés en première rangée et/ou branchés sur un dit dispositif de dilution et distribution ce qui permet d'éviter les risques de rupture de stock.

Plus particulièrement encore, le dit dispositif de dilution et distribution comporte un seul préréglage pour un dosage d'un des dits produits de nettoyage mais avec un plus grand débit. Ce plus grand débit permet d'alimenter un réservoir d'engin mobile de nettoyage indépendant tel que celui d'une auto laveuse et un tuyau de distribution de produit de nettoyage détergent dilué dans l'eau, s'étendant depuis ledit dispositif de dilution pour remplir un réservoir ou récipient externe tel que des seaux utilisés par les personnels ou un engin du type auto laveuse indépendante.

Plus particulièrement encore, chaque dit compartiment est apte à recevoir au moins 10 dits petits bidons de 1 à 2L, de préférence 15 dits petits bidons.

Plus particulièrement encore, le dit volet amovible est constitué par un volet roulant s'étendant entre un plafond et un plancher du dit meuble.

Plus particulièrement encore, la dite paroi de fond ou une dite paroi latérale supporte au-dessus du plan de travail, un ordinateur tel qu'une tablette équipée d'un programme ou un support de mode d'emploi, apte à assister un opérateur en affichant des instructions guidant la préparation des dits petits bidons et les actions à entreprendre et/ou conduite à respecter par le personnel pour la réalisation du nettoyage.

Plus particulièrement encore, les dits produits détergents de nettoyage sont des produits d'origine biotechnologique comprenant une pluralité d'ingrédients actifs différents tels que des composés organiques tensioactifs ou stabilisants, cultures bactériennes, extraits enzymatiques, stabilisants, et des composés minéraux etc...).

D'autres caractéristiques et avantages de la présente invention ressortiront mieux à la lecture de la description qui va suivre, faite de manière illustrative et non limitative, en référence aux dessins annexés sur lesquels :

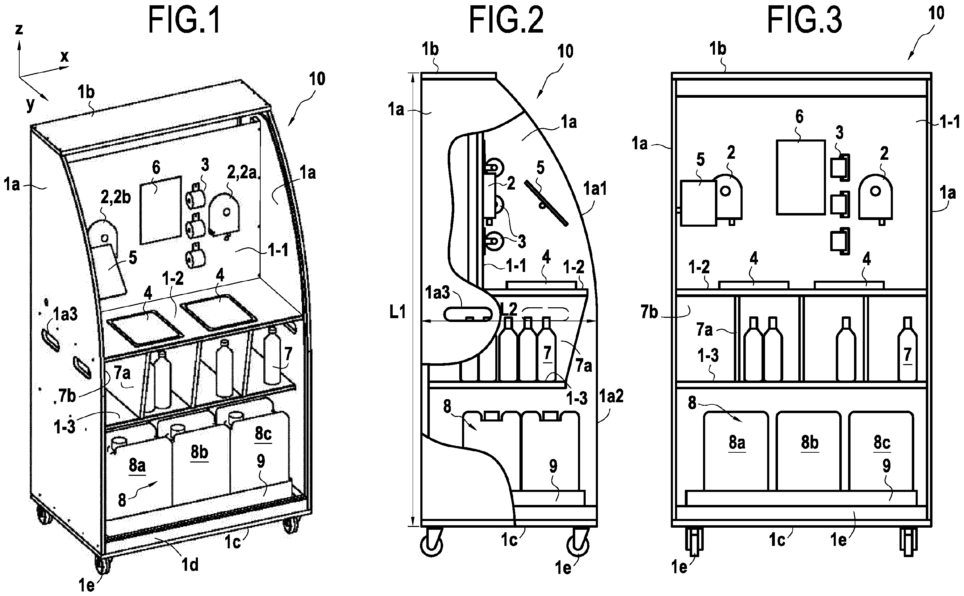

- les figures 1 à 3 représentent des vues en perspective (figure 1), de côté (figure 2) et de face (figure 3) d'une unité mobile de nettoyage selon l'invention sans les tuyaux de connexion,
- les figures 4A - 4B représentent des vues de face d'une unité mobile de nettoyage selon l'invention avec petits bidons 7 et sans (figure 4A) et avec (figure 4B) grands réservoirs 8 mais avec des tuyaux de distribution et connexion 2-2a à 2-2c,
- les figures 5A - 5B représentent des vues de côté et en perspective d'une unité mobile de nettoyage selon l'invention avec des cloisons 7a déplaçables dans des rainures 7c et l'une d'elles 7a1 dans deux positions différentes,
- les figures 6A - 6b représentent des vues d'une unité mobile de nettoyage selon l'invention avec le volet partiellement fermé (figure 6A), complètement fermé (figure 6B),
- les figures 7A et 7B représentent des vues de la face arrière d'une unité mobile de nettoyage selon l'invention lorsque le volet 11 est ouvert sur la face avant (figure 7A) et sans volet pour montrer le mécanisme d'actionnement du volet roulant (figure 7B).

L'unité mobile de nettoyage 10 ou chariot selon l'invention comprend un meuble caisson de rangement 1 monté sur 4 roulettes le comprenant une paroi supérieure de plafond 1b horizontale, une paroi de fond verticale 1-1 au-dessus d'un plan de travail horizontal 1-2 et une paroi de plancher horizontale 1c, disposées entre deux parois latérales verticales 1a. La paroi de plafond 1b est moins profonde que le plan de travail 1-2 et le plancher le de sorte que les parois latérales la comportent des bords avant supérieurs 1a1 au-dessus du plan de travail qui sont incurvés et des bords avant inférieurs 1a2 dessous le plan de travail 1-2 qui sont verticaux, les dits bords avant délimitant une face avant apte à être fermée par un volet amovible 11 sous forme de volet roulant 11.La paroi plancher le supporte ne sous face 4 roulettes à frein 1e.

Les parois latérales la comportent à mi-hauteur et/ou à proximité du niveau du plan de travail des fentes 1a3 qui servent de poignées de manutention du chariot caisson.

Le plan de travail 1-2 supporte deux petits bacs de rétention 4 destinés à recevoir des petits bidons 7 lors de leur remplissage.

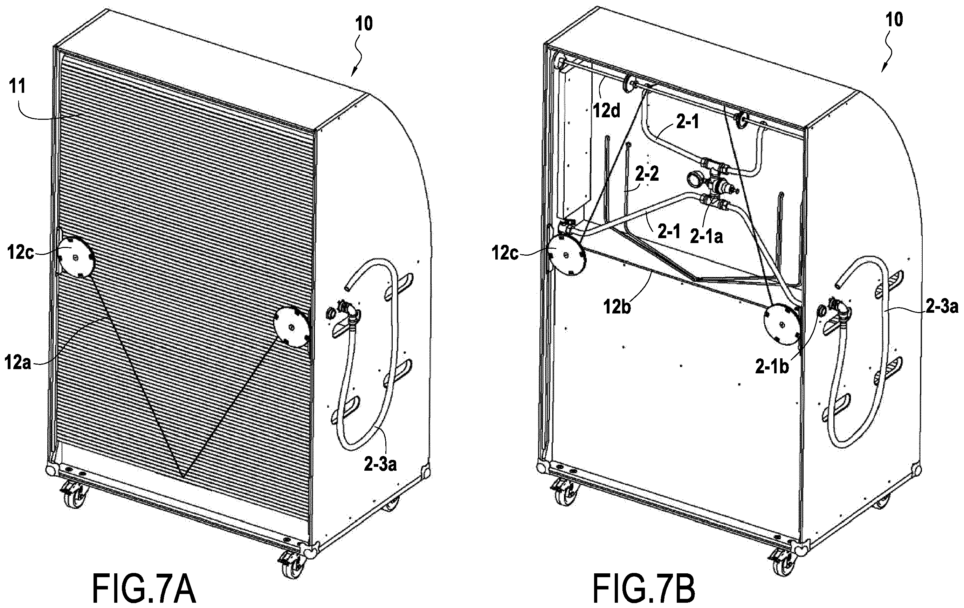

La paroi de fond 1-1 supporte au moins 2 de préférence 3 dispositifs de dilution et distribution 2, 2a, 2b 2c. Ces dispositifs de dilution automatique sont à système venturi. Les 3 dispositifs de dilution 2, 2a, 2b, 2c sont alimentés en eau via un réseau de tuyau 2-1 destiné à être branché sur une arrivée d'eau. Les deux dispositifs de dilution 2a et 2b comportent chacun un bouton 2-5 qui permet de choisir une voie par rotation parmi 3 voies 2-4a, 2-4b, 2-4c correspondant à 3 alimentations en produits de nettoyage concentrés différents dans 3 grands réservoirs 8a, 8b, 8c via 3 tuyaux d'alimentation et de liaison 2-2a, 2-2b, 2-2c qui s'étendent depuis le dispositifs de dilution jusqu'aux 3 grands réservoirs 8a, 8b, 8c. Chacune des voies 2-4a, 2-4b, 2-4c peut diluer les produits concentrés selon un taux de dilution différent. Sur la figure 7B on a représenté un unique réseau de tuyau 2-1 d'alimentation en eau des dispositifs de dilution 2a-2c, qui s'étend derrière la paroi de fond 1-1 avec un unique détendeur 2-1a et débouche en 2-1b sur les deux faces externes des parois latérales la comme montré figure 7C.

Les deux dispositifs de dilution 2a et 2b débouchent chacun sur un tuyau de distribution 2-3 de produit de nettoyage détergent dilué dans l'eau, pour remplir des petits bidons 7 posés sur le plan de travail 1-2 dans un bac de rétention 4. Les deux dispositifs de dilution 2a et 2b permettent de distribuer les produits dilués selon 2 débits de 41/min et 141/min. En pratique, on choisit le débit réduit de 41/min pour remplir des petits bidons 7 de 1 L.

Un troisième dispositif de dilution 2c est destiné à remplir un seau ou un réservoir de plus grand volume (non représenté) d'une auto laveuse indépendante de nettoyage de sol et murs avec un produit dilué contenant du produit d'un des 3 grands réservoirs 8a, 8b,8c. En pratique, on choisit le débit de 14 l/min pour remplir ce réservoir d'auto laveuse.

Sur la paroi de fond 1-1 sont en outre disposés au-dessus du plan de travail 1-2, 3 distributeurs d'étiquettes 3. Les 3 types d'étiquettes des 3 distributeurs d'étiquettes mentionnent respectivement les noms ou identifications des 3 produits détergents de nettoyage des 3 grands réservoirs 8a-8c.

Deux petits bacs de rétention 4 sont disposés sur le dit plan de travail horizontal 1-2, les deux dispositifs de dilution et distribution 2a et 2b.

Les 3 grands réservoirs 8a, 8b, 8c de 10 à 25 L remplis au moins partiellement de produits de nettoyage concentrés portant des étiquettes d'un des différents dits produits de nettoyage, sont disposés dans un grand bac de rétention 9 posé sur la plancher le et retenu par une bordure de plancher 1d. On prévoit 3 autres grands réservoirs 8a, 8b, 8c de réserve entièrement remplis de produits de nettoyage pour éviter les ruptures de stock. Ainsi; le grand bac de rétention 9 contient deux rangées de trois dits grands réservoirs.

Les petits bidons 7 sont stockés sur une étagère 1-3 disposée dessous le plan de travail 1-2 et au-dessus des grands réservoirs 8 posés sur le plancher 1c. L'étagère 1-3 supporte 3 cloisons verticales 7a disposées parallèlement auxdites parois latérales la délimitant 4 compartiments 7b contenant ou aptes à contenir chacun 3 rangées de 5 bidons 7 remplis au moins partiellement de produits de nettoyage dilués portant des étiquettes d'un des différents dits produits de nettoyage dans respectivement 3 des dits compartiments différents. Un quatrième compartiment est rempli de bidons vides neufs sans étiquettes. Les compartiments 7b à séparations mobiles 7a contiennent pour les bidons 7 neufs et usagés de retour des sites.

Les compartiments 7b servent aussi de rangement pour les bidons 7 vides de retour des sites clients, car les livraisons de bidons 7 remplis sur les sites sont assorties de la reprise des bidons vides, qui en retour sont soit à nouveau remplis ou soit placés en attente dans la station. Il est aussi prévu dans ce rangement un espace pour des bidons 7 vides neufs en réserve, pouvant être déployés chez de nouveaux clients après avoir été étiquetés sur place conformément à la législation, grâce aux trois portes rouleaux dérouleurs d'étiquettes.

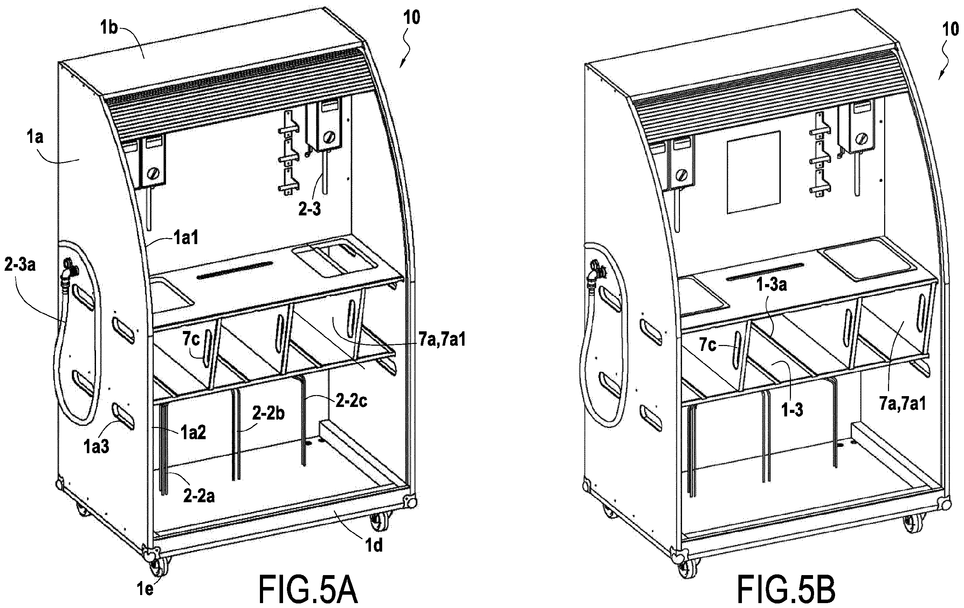

Sur les figures 5A-5B, les dites cloisons verticales 7a sont déplaçables latéralement du fait qu'elles sont montées amovibles, les dits compartiments 7b pouvant ainsi contenir des quantités différentes de dits petits bidons portant des étiquettes différentes. Selon les sites ou la typologie de locaux à nettoyer, il peut y avoir beaucoup de bidons d'un des produits notamment le produit « Nu Kleen Smell » décrit ci-après qui est le détergent de base courant pour le nettoyage de toutes les surfaces, et peu de bidons d'un autre produit de nettoyage, par exemple le produit « Nu Action 3 » décrit ci-après car seulement utilisé pour le détartrage des sanitaires par exemple. Et, ainsi il peut y avoir un besoin de stocker en retour dans les compartiments 7b du meuble, plus de bidons d'un produit donné et moins d'un autre produit d'où la nécessité de ce réglage.

Pour ce faire, les cloisons amovibles 7a sont mises en place ou retirées par coulissement dans des rainures 1-3a parallèles au nombre de 8 sur la face supérieure de l'étagère 1-3. Les cloisons 7a, 7a1 sont dotées d'une fente usinée 1-3a servant de poignée de préhension en façade (similaires à celles 1a3 servant de poignées pour le roulage). Le déplacement des cloisons 7a autorisent l'utilisateur en fonction de la configuration nécessaire, à ajuster le nombre et volume des compartiments 7b.

Ainsi, il est possible de réduire le nombre de compartiments 7b à par exemple 3 (figure 5B) au lieu de 4 (figure 5A) si un des trois produits n'est pas utilisé sur un site. La cloison 7a retirée, afin de ne pas être égarée, peut être alors astucieusement stockée en la faisant coulisser dans une des deux rainures latérales, créée à l'extrémité intérieure du compartiment tout contre les parois latérales 1a.

Les dits grands réservoirs contenant les différents dits produits de nettoyage sont respectivement de couleurs différentes et les dites étiquettes identifiant les différents dits produits de nettoyage sont respectivement de couleurs différentes.

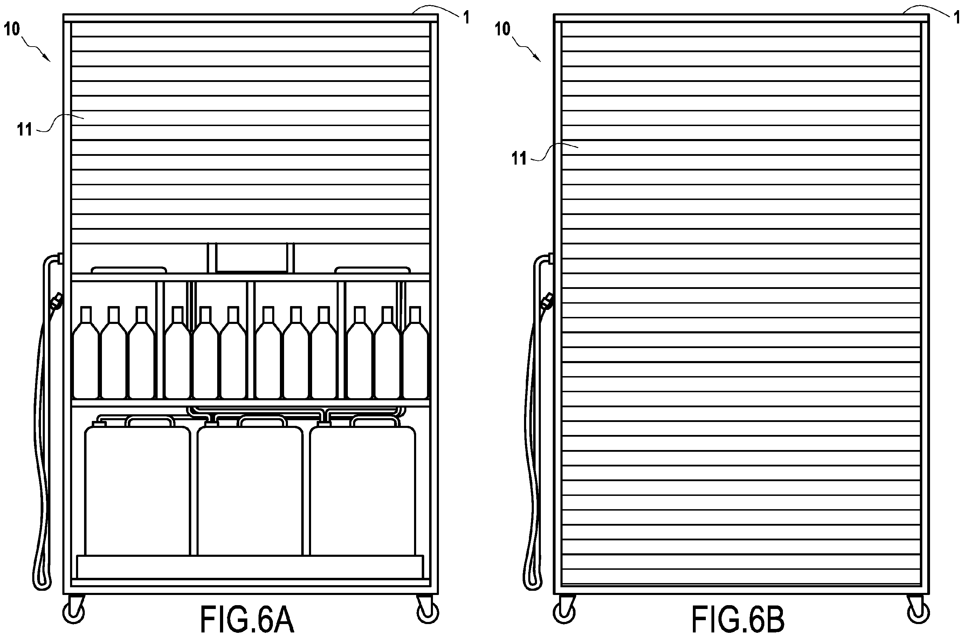

En option, on prévoit un volet amovible de sécurité constitué par un volet roulant 11 s'étendant entre le plafond 1b et le plancher le le long de glissière sur les bords avant des parois latérales la du dit caisson meuble 1 est représenté figures 6A-6B. Ce rideau de fermeture 11 permet de sécuriser les produits et en empêcher l'accès à tout personnel étranger au service. Cette option sera souhaitable pour un équipement mis en place chez un client bénéficiant du nettoyage et où les locaux sont accessibles à ses personnels ou encore à ses clients. Sur les figures 7A-7B, on montre le mécanisme d'actionnement 12 du volet roulant 11 monté sur un axe supérieur 12a et actionnable en ouverture ou fermeture par en roulement ou respectivement déroulement autour de l'axe 12a à l'aide d'un câble 12b enroulée sur des poulies à ressort 12c.

La dite paroi de fond supporte au-dessus du plan de travail, un ordinateur tel qu'une tablette 5 équipée d'un programme ou vidéo pour visionner des vidéos tutoriels de réalisation et utilisations des produits de nettoyage dilués par les utilisateurs en poste de dilution et un support de mode d'emploi 6 ou charte murale comme aide-mémoire installée dans un support intégré, apte à assister un opérateur en affichant des instructions guidant la préparation des dits petits bidons et les actions à entreprendre et/ou conduite à respecter par le personnel pour la réalisation du nettoyage.

L'unité mobile de nettoyage selon l'invention permet d'éviter les ruptures de stock et les entrepôts remplis de produits. On évite aussi la nécessité d'un local « nettoyage » avec arrivée d'eau et dispositif de dilution au sein des agences de sociétés de nettoyage et dans les sites des clients.

Deux opérateurs peuvent travailler à la dilution en même temps, 2 postes à 4 voies dont 1 voie gros débit pour remplir rapidement les réservoirs d'engins mobiles de nettoyage indépendants tels que des auto laveuses. Les deux dispositifs de dilution donnent la possibilité d'effectuer des dilutions avec 2 opérateurs simultanément.

Les bacs de rétention 4 et 9 visent à prévenir les dégâts en cas de débordement lors du remplissage ou manipulation des bidons 7 et réservoirs 8 pour être conforme à la réglementation.

Deux connexions rapide avec tuyau souple 2-1 pour l'arrivée d'eau potable sont possible à gauche ou à droite.

Deux poignées 1a3 sous forme de fentes sur les parois latérales la permettent de faciliter le déplacement du chariot sur roulettes.

La pré-dilution s'opère ainsi. Les dispositifs de dilution 2 sont configurés pour effectuer une dilution à partir de réservoirs 8 de produits de nettoyage décrits ci-après concentré à 20% en volume. Sur demande, une dilution « prête à l'emploi » est possible pour les sites importants.

On utilise en particulier les trois produits suivants de nature biotechnologique hautement concentrés, notamment sous forme de kits dénommés « trio kleen » de la société Innuscience (Canada) comprenant par exemple les 3 détergents suivants :
- le produit détergent dénommé « Nu-action 3 », un nettoyant dégraissant contenant un alcool en C12-C16 éthoxylé et des sels et hydroxydes de 1-propanaminium, 3-amino-N (carboxyméthyle)-N,N-diméthyle-N-coco acyle à PH neutre pour enlever les taches tenaces, nettoyer et dégraisser rapidement et en profondeur toutes les surfaces y compris les sols;
- le produit détergent dénommé « Nu-Kleen Smell » est un nettoyant biotechnologique désinfectant pour toutes les surfaces qui continue à éliminer les odeurs notamment d'urine après la routine de nettoyage dans les salles à déchets, quais de réception des marchandises, stationnements, cages d'escaliers, installations sanitaires... Il est aussi utilisé pour les aires générales (bureaux, centres sportifs, etc.) et les miroirs, éviers, robinetteries, cuvettes, comptoirs, vitres.
- le produit détergent dénommé « Nu-Bio Scrub », un nettoyant détartrant et désincrustant contenant un alcool en C12-C16 éthoxylé et de l'acide lactique pour nettoyer les installations sanitaires telles que douches, baignoires, urinoirs, toilettes, robinetterie et autres surfaces exposées à l'eau et/ou résidus de savon et pour l'entretien de sols dans les vestiaires et autour des piscines ainsi que pour l'entretien des surfaces en acier inoxydable, laiton, cuivre ou autres métaux.

On ne liste ci-dessus que les ingrédients qui ont un impact sur la classification de risque du produit. C'est pourquoi, on n'indique pour « Nu-kleen » aucun ingrédient et pour les deux autres deux ingrédients seulement. Mais, chacune de ces formulations est composée de 10 à 15 ingrédients actifs différents (tensioactifs, cultures bactériennes, extraits enzymatiques, stabilisants, minéraux, etc..) et ces formulations sont toutes différentes et spécifiques. Les 3 formulations sont donc très différentes en composition et en mode d'action.

L'utilisation de ces produits de nettoyage biotechnologiques, impose à ses exploitants des dilutions extrêmement précises et pérennes de ces produits qui présentent des tarifs plus de dix fois supérieures par rapport aux produits de nettoyage chimiques classiques. Cette utilisation, pour les raisons précitées, impose la mise en œuvre chez les clients ou en agence d'une station de dilution avec trois produits multitâches concentrés qui permettra des dilutions précises et garanties des produits.

Lorsqu'un petit bidon 7 est épuisé par le personnel de nettoyage, il n'est plus nécessaire de le rincer à l'eau ni de le jeter car il est repris comme en consigne lors des livraisons suivantes.

L'unité mobile de nettoyage selon l'invention permet donc d'éviter les bidons vides en déchet sur les sites, le rinçage des bidons vides sur site et des rejets associés, et il n'est plus de besoin d'un dosage local à demeure dans un local. L'unité mobile de nettoyage selon l'invention permet en outre d'éviter les risques de santé liés à la dilution sur le chantier, et le port ou manutention de réservoirs lourds.

En ce qui concerne la dilution effectuée directement au sein des agences ou sociétés de nettoyage, et le cas échéant par les personnels de nettoyage dans des petits bidons ou pulvérisateurs à partir des gros réservoirs de produits concentrés, des risques d'erreur de produit et/ou d'étiquettes ne sont plus possibles, sans compter les risques de dégâts écologiques en cas de mauvais versement desdits produits toxiques qui sont écartés, tout comme les risques sanitaires en cas d'accident corporel à l'occasion de ces transvasements de produits.

En pratique, on utilise des dispositifs de dilution automatique 2a, 2b commercialisés par la société SEKO Spa(Italie) sous la référence PROMAX sous la référence PROMAX 4 voies en débit 4 litres minute pour le remplissage en environ 15 secondes des bidons 7 de 1 litre. Sur ces dispositifs, pour chacune des 4 voies il y a 4 positions de préréglage numérotées de 1 à 4 du bouton de sélection 2-5 et en amont, 4 tétines situées à la base du dispositif où viennent se brancher chacun des 4 tuyaux plongeurs 2-2a, 2-2b, 2-2c pour chacun des grands réservoirs 8a, 8b et 8c produits. Il y a donc une position inutilisée.

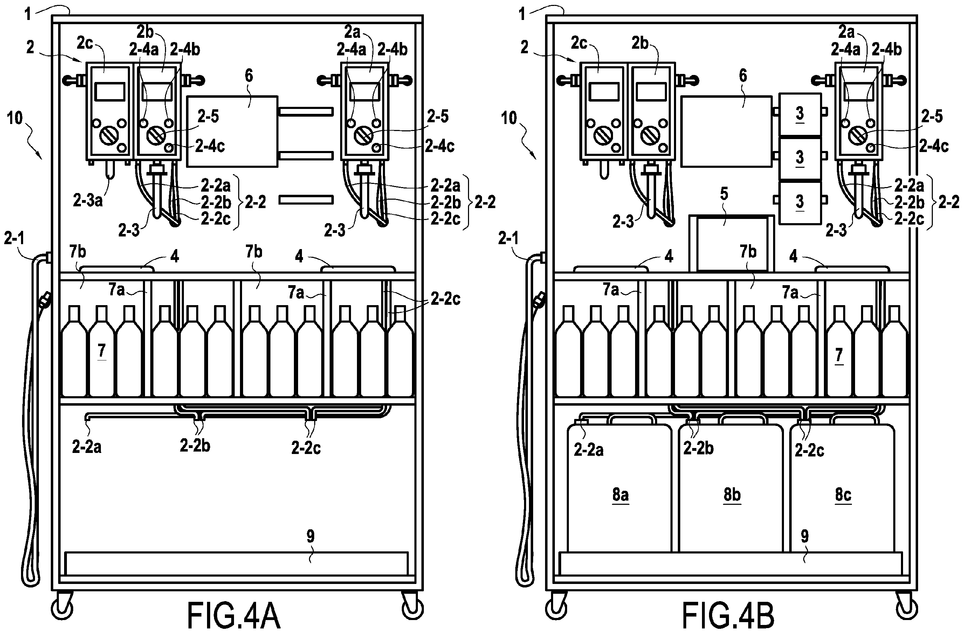

Le dispositif de dilution 2c est un dispositif de référence PROMAX 1 voie seulement avec une tétine raccordée à un tuyau plongeur (non représenté) du produit Nu Action 3, permettra de diluer ce seul produit au taux préconisé pour le nettoyage mécanisé, sous un débit de 14 litres minute et ce afin de remplir rapidement (3 à 4 minutes) des seaux ou un réservoir d'une auto laveuse, grâce un tuyau 2-3a disponible sur la face externe d'une paroi latérale la côté gauche du caisson (figures 4A-4B) .

| | Concentration initiale | Dilution pour Bidon 7 | Dilution pour Auto-laveuse |
|---|---|---|---|
| Nu-Kleen Smell | 20 % | 0,13 à 0,25% | - |
| Nu Action 3 | 20 % | 0,20 à 0,50% | 0,25% |
| Nu Bio Scrub | 20 % | 0,50 à 2,00% | |

A titre illustratif, les dimensions suivantes hors tout sont étudiées afin que l'équipement puisse être placé dans tous les bâtiments et notamment franchir toute porte standard et pénétrer dans les cabines d'ascenseurs :
- Hauteur H : 1845 mm
- Largeur L1 : 1148 mm
- Profondeur L2 : 775 mm

La largeur L1 de 1148 mm est choisie afin que deux personnes puissent simultanément y travailler.

Le chariot 10 est conçu pour offrir l'ergonomie et l'aisance d'utilisation à tous les collaborateurs des entreprises de propreté en charge de la gestion des produits de nettoyage. Ses faces latérales la à bords avant arrondis permettent à la luminosité du local dans lequel il est positionné de venir éclaircir favorablement le poste de travail, situé à 1m10 du sol soit à une hauteur compatible avec toute personne de taille moyenne.

## Revendications

1. Unité mobile de dilution, stockage et distribution de produits de nettoyage (1), formant un meuble caisson (1) de rangement monté sur roulettes (1e) comprenant au moins :
a) une paroi de fond verticale (1-1) au-dessus d'un plan de travail horizontal (1-2) disposé entre deux parois latérales verticales (1a) délimitant une face avant apte à être fermée par un volet amovible (10) ;
b) au moins un dispositif de dilution et distribution (2, 2a-2b) disposé contre la dite paroi de fond verticale (1-1) ou une dite paroi latérale (la), au-dessus dudit plan de travail horizontal (1-2) ; le dit dispositif de dilution et distribution (2) étant branché ou apte à être branché sur :
- une alimentation en eau, de préférence via un premier tuyau (2-1), et
- une pluralité de tuyaux d'alimentation (2-2a, 2-2b, 2-2c) en une pluralité de produits détergents concentrés, s'étendant depuis ledit dispositif de dilution jusqu'à une pluralité de grands réservoirs (8) remplis au moins en partie de différents produits détergents concentrés, et
- un tuyau de distribution (2-3) de produit de nettoyage détergent dilué dans l'eau, s'étendant depuis ledit dispositif de dilution pour remplir des petits bidons (7) posés sur le plan de travail,
- le dit dispositif de dilution et distribution (2) comprenant une pluralité de préréglages préenregistrés de dilutions différentes (2-4a,2-4b,2-4c) correspondant à une pluralité de concentrations spécifiques de dilution de respectivement une pluralité de produits détergents de nettoyage dilués selon un débit réduit donné pour remplir des dits petits bidons (7);
c) une pluralité de distributeurs d'étiquettes (3) de plusieurs types disposés contre la dite paroi de fond verticale (1-1) ou une dite paroi latérale (la), au-dessus dudit plan de travail horizontal (1-2); les différents types d'étiquettes des différents distributeurs d'étiquettes mentionnant respectivement les noms des différents produits détergents de nettoyage ;
d) au moins un premier bac de rétention (4) supporté ou défini par le dit plan de travail horizontal (1-2), de préférence disposé dessous le dit dispositif de dilution et distribution, de préférence deux bacs de rétention disposés dessous deux dispositifs de dilution et distribution ;
e) une première étagère (1-3) dessous le plan de travail (1-2) supportant une pluralité cloisons verticales (7a) disposées parallèlement auxdites parois latérales (1a) délimitant une pluralité de compartiments (7b) aptes à contenir chacun une pluralité de dits petits bidons (7) portant des étiquettes d'un des différents dits produits de nettoyage dans respectivement des dits compartiments différents; et
f) une deuxième étagère ou paroi de plancher (1d) supportant une pluralité de dits grands réservoirs (8) remplis au moins en partie de différents produits détergents de nettoyage, avec au moins un deuxième bac de rétention (9) dans lequel sont disposés la pluralité de dits grands réservoirs (8).

2. Unité mobile (1) selon la revendication 1, **caractérisé en ce qu'**elle comprend deux dits dispositif de dilution et distribution (2, 2a, 2b) contre la dite paroi de fond (1-1) et deux dits premiers bacs de rétention (4) sur le dit plan de travail (1-2).

3. Unité mobile (1) selon l'une des revendications 1 ou 2, **caractérisé en ce que** les dites cloisons verticales (7a) sont amovibles, déplaçables latéralement, les dits compartiments (7b) pouvant ainsi être en nombre et volume variables pour contenir des quantités différentes de dits petits bidons (7) portant des étiquettes différentes.

4. Unité mobile (1) selon l'une des revendications 1 à 3, **caractérisé en ce qu'**elle comprend :
- au moins un dit dispositif de dilution et distribution (2, 2a,2b) avec au moins trois réglages (2-4a,2-4b,2-4c) correspondant à trois concentrations spécifiques de dilution des trois produits détergents de nettoyage différents selon un débit réduit donné pour remplir des petits bidons (7);
- trois distributeurs d'étiquettes (3) mentionnant respectivement les noms de dits trois produits détergents de nettoyage différents ;
- au moins trois dits compartiments (7b) contenant chacun une catégorie différente de bidons portant une dite étiquette et au moins en partie remplis d'un dit produit détergent de nettoyage différent dans chaque compartiment,
- au moins trois dits grands réservoirs (8) pour respectivement chacun des trois types de produits détergents de nettoyage côte à côte, les dits grands réservoirs étant équipés de tuyaux (9a) de liaison avec un dit dispositif de dilution et distribution (2).

5. Unité mobile (1) selon l'une des revendications 1 à 4, **caractérisé en ce que** la dite première étagère (1-3) comprend quatre dits compartiments (7b) dont trois des compartiments contiennent chacun une catégorie différente de bidons portant une dite étiquette et au moins en partie remplis d'un dit produit détergent de nettoyage différent dans chaque compartiment, un quatrième compartiment contenant des bidons neufs vides sans étiquette.

6. Unité mobile (1) selon l'une des revendications 1 à 5, **caractérisé en ce que** les dits grands réservoirs (8, 8a, 8b, 8c) contenant les différents dits produits de nettoyage sont respectivement de couleurs différentes et les dites étiquettes identifiant les différents dits produits de nettoyage sont respectivement de couleurs différentes.

7. Unité mobile (1) selon l'une des revendications 1 à 6, **caractérisé en ce que** la dite deuxième étagère ou paroi de plancher (1d) supporte deux rangées d'une dite pluralité de dits grands réservoirs, de préférence deux rangées de trois dits grands réservoirs de 10 à 25 L.

8. Unité mobile (1) selon l'une des revendications 1 à 7, **caractérisé en ce qu'**un dit dispositif de dilution et distribution (2c) comporte un seul préréglage pour un dosage d'un des dits produits de nettoyage mais avec un plus grand débit et un tuyau de distribution (2-3a) de produit de nettoyage détergent dilué dans l'eau, s'étendant depuis ledit dispositif de dilution pour remplir un réservoir ou récipient externe.

9. Unité mobile (1) selon l'une des revendications 1 à 8, **caractérisé en ce que** chaque dit compartiment (7b) est apte à recevoir au moins 10 dits petits bidons de 1 à 2L, de préférence 15 dits petits bidons.

10. Unité mobile (1) selon l'une des revendications 1 à 9, **caractérisé en ce que** le dit volet amovible est constitué par un volet roulant (11) s'étendant entre un plafond (1b) et un plancher (1c) du dit meuble.

11. Unité mobile (1) selon l'une des revendications 1 à 10, **caractérisé en ce que** la dite paroi de fond ou une dite paroi latérale supporte au-dessus du plan de travail, un ordinateur tel qu'une tablette (5) équipée d'un programme ou un support de mode d'emploi (6), apte à assister un opérateur en affichant des instructions guidant la préparation des dits petits bidons et les actions à entreprendre et/ou conduite à respecter par le personnel pour la réalisation du nettoyage.

## Patentansprüche

1. Mobile Einheit zum Verdünnen, Lagern und Abgeben von Reinigungsprodukten (1), die ein Kastenmöbel (1) für das Verstauen bildet, das auf Rollen (1e) angebracht ist, wenigstens umfassend:
a) eine vertikale Bodenwand (1-1) oberhalb einer horizontalen Arbeitsfläche (1-2), die zwischen zwei vertikalen Seitenwänden (1a) angeordnet ist, welche eine Vorderseite begrenzen, die geeignet ist, durch eine lösbare Klappe (10) verschlossen zu werden (10);
b) wenigstens eine Verdünnungs- und Abgabevorrichtung (2, 2a-2b), die an der vertikalen Bodenwand (1-1) oder einer Seitenwand (1a) oberhalb der horizontalen Arbeitsfläche (1-2) angeordnet ist, wobei die Verdünnungs- und Abgabevorrichtung (2) angeschlossen ist oder geeignet ist, angeschlossen zu werden an:
- eine Wasserversorgung, vorzugsweise über ein erstes Rohr (2-1), und
- eine Vielzahl von Rohren zur Versorgung (2-2a, 2-2b, 2-2c) mit einer Vielzahl von konzentrierten Reinigungsmitteln, die sich von der Verdünnungsvorrichtung bis zu einer Vielzahl von großen Behältern (8) erstrecken, welche wenigstens teilweise mit unterschiedlichen konzentrierten Reinigungsmitteln gefüllt sind, und
- ein Rohr zur Abgabe (2-3) eines in Wasser verdünnten Reinigungsmittels, das sich von der Verdünnungsvorrichtung aus erstreckt, um auf der Arbeitsfläche abgestellte kleine Flaschen (7) zu füllen,
- wobei die Verdünnungs- und Abgabevorrichtung (2) eine Vielzahl von zuvor gespeicherten Voreinstellungen verschiedener Verdünnungen (2-4a, 2-4b, 2-4c) umfasst, die einer Vielzahl von spezifischen Verdünnungskonzentrationen von jeweils einer Vielzahl von verdünnten Reinigungsmitteln nach einer gegebenen reduzierten Durchflussrate entsprechen, um kleine Flaschen (7) zu füllen,
c) eine Vielzahl von Spendern für Etiketten (3) unterschiedlicher Typen, die an der vertikalen Bodenwand (1-1) oder einer Seitenwand (1a) oberhalb der horizontalen Arbeitsfläche (1-2) angeordnet sind, wobei die verschiedenen Typen von Etiketten der unterschiedlichen Etikettenspender jeweils die Namen der unterschiedlichen Reinigungsmittel angeben,
d) wenigstens eine erste Aufnahmewanne (4), die von der horizontalen Arbeitsfläche (1-2) getragen oder durch diese definiert wird, vorzugsweise unter der Verdünnungs- und Abgabevorrichtung angeordnet ist, vorzugsweise zwei Aufnahmewannen, die unter zwei Verdünnungs- und Abgabevorrichtungen angeordnet sind,
e) ein erstes Regalbrett (1-3) unter der Arbeitsfläche (1-2), das eine Vielzahl von vertikalen Trennwänden (7a) trägt, die parallel zu den Seitenwänden (1a) angeordnet sind und eine Vielzahl von Fächern (7b) begrenzen, welche geeignet sind, jeweils eine Vielzahl von kleinen Flaschen (7) mit Etiketten eines der verschiedenen Reinigungsprodukte in jeweils unterschiedlichen Fächern zu enthalten, und
f) ein zweites Regalbrett oder eine Bodenwand (1d), das/die eine Vielzahl von großen Behältern (8) trägt, welche wenigstens teilweise mit unterschiedlichen Reinigungsmitteln gefüllt sind, mit wenigstens einer zweiten Aufnahmewanne (9), in der die Vielzahl von großen Behältern (8) angeordnet ist.

2. Mobile Einheit (1) nach Anspruch 1, **dadurch gekennzeichnet, dass** sie zwei Verdünnungs- und Abgabevorrichtungen (2, 2a, 2b) an der Bodenwand (1-1) sowie zwei erste Aufnahmewannen (4) auf der Arbeitsfläche (1-2) umfasst.

3. Mobile Einheit (1) nach einem der Ansprüche 1 oder 2, **dadurch gekennzeichnet, dass** die vertikalen Trennwände (7a) lösbar, seitlich beweglich sind, wobei die Fächer (7b) somit hinsichtlich Anzahl und Volumen variabel sein können, um unterschiedliche Mengen von kleinen Flaschen (7) mit unterschiedlichen Etiketten zu enthalten.

4. Mobile Einheit (1) nach einem der Ansprüche 1 bis 3, **dadurch gekennzeichnet, dass** sie umfasst:
- wenigstens eine Verdünnungs- und Abgabevorrichtung (2, 2a, 2b) mit wenigstens drei Einstellungen (2-4a, 2-4b, 2-4c), die drei spezifischen Verdünnungskonzentrationen der drei unterschiedlichen Reinigungsmittel nach einer gegebenen reduzierten Durchflussrate entsprechen, um kleine Flaschen (7) zu füllen,
- drei Etikettenspender (3), die jeweils die Namen von drei unterschiedlichen Reinigungsmitteln angeben,
- wenigstens drei Fächer (7b), die jeweils eine andere Kategorie von Flaschen enthalten, die ein Etikett tragen und jeweils wenigstens teilweise mit einem anderen Reinigungsmittel in jedem Fach gefüllt sind,
- wenigstens drei große Behälter (8) für jeweils einen jeden der drei Typen von Reinigungsmitteln nebeneinander, wobei die großen Behälter mit Rohren (9a) zur Verbindung mit einer Verdünnungs- und Abgabevorrichtung (2) ausgestattet sind.

5. Mobile Einheit (1) nach einem der Ansprüche 1 bis 4, **dadurch gekennzeichnet, dass** das erste Regalbrett (1-3) vier Fächer (7b) umfasst, wobei drei der Fächer jeweils eine andere Kategorie von Flaschen enthalten, die ein Etikett tragen und wenigstens teilweise mit einem anderen Reinigungsmittel in jedem Fach gefüllt sind, wobei ein viertes Fach leere neue Flaschen ohne Etikett enthält.

6. Mobile Einheit (1) nach einem der Ansprüche 1 bis 5, **dadurch gekennzeichnet, dass** die großen Behälter (8, 8a, 8b, 8c), die die verschiedenen Reinigungsmittel enthalten, jeweils unterschiedliche Farben aufweisen, und die Etiketten, welche die verschiedenen Reinigungsmittel ausweisen, jeweils unterschiedliche Farben haben.

7. Mobile Einheit (1) nach einem der Ansprüche 1 bis 6, **dadurch gekennzeichnet, dass** das zweite Regalbrett oder die Bodenwand (1d) zwei Reihen mit einer Vielzahl von großen Behältern, vorzugsweise zwei Reihen mit drei großen 10- bis 25 L-Behältern trägt.

8. Mobile Einheit (1) nach einem der Ansprüche 1 bis 7, **dadurch gekennzeichnet, dass** eine Verdünnungs- und Abgabevorrichtung (2c) eine einzige Voreinstellung für eine Dosierung von einem der Reinigungsmittel umfasst, jedoch mit einer größeren Durchflussrate und einem Rohr zur Abgabe (2-3a) eines in Wasser verdünnten Reinigungsmittels, das sich von der Verdünnungsvorrichtung aus erstreckt, um ein(en) externen Behälter oder externes Behältnis zu füllen.

9. Mobile Einheit (1) nach einem der Ansprüche 1 bis 8, **dadurch gekennzeichnet, dass** jedes Fach (7b) geeignet ist, wenigstens 10 kleine Flaschen mit 1 bis 2 L, vorzugsweise 15 kleine Flaschen, aufzunehmen.

10. Mobile Einheit (1) nach einem der Ansprüche 1 bis 9, **dadurch gekennzeichnet, dass** die lösbare Klappe durch einen Rollladen (11) gebildet ist, der sich zwischen einer Decke (1b) und einem Boden (1c) des Möbels erstreckt.

11. Mobile Einheit (1) nach einem der Ansprüche 1 bis 10, **dadurch gekennzeichnet, dass** die Bodenwand oder eine Seitenwand oberhalb der Arbeitsfläche einen Computer, wie ein mit einem Programm ausgerüstetes Tablet (5), oder einen Halter für eine Bedienungsanleitung (6) trägt, der geeignet ist, eine Bedienungsperson dadurch zu unterstützen, dass Anweisungen, welche die Vorbereitung der kleinen Flaschen anleiten, und die durchzuführenden Aktionen und/oder das durch das Personal für die Durchführung der Reinigung einzuhaltende Verhalten angezeigt werden.

## Claims

1. A mobile unit for dilution, storage and dispensing of cleaning products (1), that forms a storage-organization cabinet unit (1) mounted on castor wheels (1e) comprising at least:
a) a vertical rear wall (1-1) above a horizontal planar work surface (1-2) disposed between two vertical lateral walls (1a) delimiting a front face that is adapted so as to be closed by a detachable shutter member (10);
b) at least one dilution and dispensing device (2, 2a-2b) disposed against said vertical rear wall (1-1) or one said lateral wall (1a), above said horizontal planar work surface (1-2); said dilution and dispensing device (2) being connected or adapted so as to be connected to:
- a water supply line, preferably via a first pipe (2-1), and
- a plurality of supply pipes (2-2a, 2-2b, 2-2c) in a plurality of concentrated detergent products, extending from said dilution device to a plurality of large reservoirs (8) filled at least in part with various different concentrated detergent products, and
- a product dispensing pipe (2-3) for dispensing a detergent cleaning product diluted with water, that extends from said dilution device for filling small containers (7) placed on the planar work surface,
- said dilution and dispensing device (2) including a plurality of pre-recorded presets of different dilutions (2-4a, 2-4b, 2-4c) corresponding to a plurality of specific dilution concentrations respectively for a plurality of detergent cleaning products diluted based on a given reduced flow rate for filling said small containers (7);
c) a plurality of labels dispensers (3) for dispensing labels of various types, disposed against said vertical rear wall (1-1) or one said lateral wall (1a), above said horizontal planar work surface (1-2); different types of labels of various different labels dispensers respectively indicating names of various different detergent cleaning products;
d) at least one first retention basin (4) supported or defined by said horizontal planar work surface (1-2), preferably disposed below said dilution and dispensing device, preferably two retention basins disposed below two dilution and dispensing devices;
e) a first shelf (1-3) below the planar work surface (1-2) supporting a plurality of vertical partitions (7a) disposed parallel to said lateral walls (1a) delimiting a plurality of compartments (7b), each compartment being adapted so as to contain a plurality of said small containers (7) bearing labels of one of the different said cleaning products respectively in said different compartments; and
f) a second shelf or bottom wall (1d) supporting a plurality of said large reservoirs (8) filled at least in part with various different detergent cleaning products, with at least one second retention basin (9) in which are disposed the plurality of said large reservoirs (8).

2. The mobile unit (1) according to claim 1, **characterized in that** it comprises two said dilution and dispensing devices (2, 2a, 2b) disposed against said rear wall (1-1) and two said first retention basins (4) disposed on said planar work surface (1-2).

3. The mobile unit (1) according to any of claims 1 or 2, **characterized in that** said vertical partitions (7a) are removable, and movable laterally, said compartments (7b) thus having the ability to be variable in terms of number and volume in order to hold different quantities of said small containers (7) bearing different labels.

4. The mobile unit (1) according to any of claims 1 to 3, **characterized in that** it comprises:
- at least one said dilution and dispensing device (2, 2a, 2b) with at least three presets (2-4a, 2-4b, 2-4c) corresponding to three specific concentrations of dilution of three different detergent cleaning products based on a given reduced flow rate for filling the small containers (7);
- three labels dispensers (3) mentioning respectively names of said three different detergent cleaning products;
- at least three said compartments (7b) each containing a different category of containers bearing a said label and at least in part filled with one said different detergent cleaning product in each compartment;
- at least three said large reservoirs (8) respectively for each of three types of detergent cleaning products disposed side by side, said large reservoirs being equipped with connecting pipes (9a) for connecting with a said dilution and dispensing device (2).

5. The mobile unit (1) according to any of claims 1 to 4, **characterized in that** said first shelf (1-3) comprises four said compartments (7b) of which three compartments each contain a different category of containers bearing a said label and at least in part filled with a said different detergent cleaning product in each compartment, a fourth compartment containing empty new containers without labels.

6. The mobile unit (1) according to any of claims 1 to 5, **characterized in that** said large reservoirs (8, 8a, 8b, 8c) containing different said cleaning products are respectively of different colors and said labels identifying various different said cleaning products are respectively of different colors.

7. The mobile unit (1) according to any of claims 1 to 6, **characterized in that** said second shelf or bottom wall (1d) supports two rows of a said plurality of said large reservoirs, preferably two rows of three said large reservoirs of 10 to 25 L capacity.

8. The mobile unit (1) according to any of claims 1 to 7, **characterized in that** said dilution and dispensing device (2c) includes a single preset for a dosing of one of the said cleaning products but with a higher flow rate, and a product dispensing pipe (2-3a) for dispensing the detergent cleaning product diluted with water, that extends from the said dilution device for filling an external receptacle or reservoir.

9. The mobile unit (1) according to any of claims 1 to 8, **characterized in that** each said compartment (7b) is adapted so as to receive at least 10 said small containers of 1 to 2 L capacity, preferably 15 said small containers.

10. The mobile unit (1) according to any of claims 1 to 9, **characterized in that** said detachable shutter member is constituted by a roller shutter (11) that extends between a ceiling (1b) and a floor (1c) of said cabinet.

11. The mobile unit (1) according to any of claims 1 to 10, **characterized in that** said rear wall or a said lateral wall supports above the planar work surface, a computer such as a tablet (5) equipped with a software program or a support medium with operating instructions (6), that is adapted so as to assist an operator by displaying instructions that guide the preparation of said small containers and the actions to be undertaken and/or conduct to be adhered to by the personnel in order to carry out a cleaning.
